# EUROPÄISCHE PATENTSCHRIFT

(11) **EP 1 682 374 B1**
(45) Veröffentlichungstag und Bekanntmachung des Hinweises auf die Patenterteilung: **17.12.2008**
(21) Anmeldenummer: 04765841.4
(22) Anmeldetag: 06.10.2004
(51) Int. Cl.: B60K 15/04

(54) **VERSCHLUSSDECKEL FÜR DEN FÜLLSTUTZEN EINES BEHÄLTERS UND FÜLLSTUTZEN HIERFÜR**
CLOSURE CAP FOR THE FILLER NECK OF A RESERVOIR AND FILLER NECK THEREFOR
COUVERCLE DE FERMETURE POUR TUBULURE DE REMPLISSAGE D'UN RECIPIENT ET TUBULURE DE REMPLISSAGE CORRESPONDANTE

(30) Priorität: 14.11.2003 DE 20318043 U
(43) Veröffentlichungstag der Anmeldung: 26.07.2006
(73) Patentinhaber: Reutter GmbH, 71336 Waiblingen (DE)
(72) Erfinder: BEHNAMRAD, Kazem, 71364 Winnenden (DE); RAULEDER, Robert, 71404 Korb (DE)
(74) Vertreter: Fuhlendorf, Jörn
(86) Internationale Anmeldenummer: PCT/EP2004/011142
(87) Internationale Veröffentlichungsnummer: WO 2005/049359

(56) Entgegenhaltungen:
- DE-A1- 1 630 159
- DE-A1- 2 120 525
- DE-A1- 3 005 419
- DE-C1- 3 446 691
- DE-U- 1 970 790
- DE-U- 7 317 886
- GB-A- 546 775
- US-A- 4 165 816
- US-A- 5 381 919
- US-A- 5 395 004
- US-A- 6 095 363

## Beschreibung

Die vorliegende Erfindung bezieht sich auf einen Verschlussdeckel für den Füllstutzen eines Behälters, insbesondere eines solchen für Kraftstoff oder Motorenöl für bspw. Kraftfahrzeuge, nach dem Oberbegriff des Anspruchs 1.

Bei einem aus der DE 30 05 419 C2 bekannten Verschlussdeckel für einen Kraftstoffbehälter ist die Handhabe über ein koaxiales Schließrohr mit dem einen Teil (Dichtteil) axial und drehfest verbunden, um welches Schließrohr das andere Teil (Spannteil)in Form von zwei diametral gegenüberliegenden Riegelnasen gegen die Wirkung einer Feder axial bewegbar gehalten ist. Zwischen dem einen Teil und dem anderen Teil ist eine Distanzhülse angeordnet. Das eine Teil trägt den Dichtring, der in verriegeltem Zustand des Verschlussdeckels an der Füllstutzendichtfläche dichtend anliegt.

Bei der Handhabung dieses in den Füllstutzen eingeführten bekannten Verschlussdeckels wird dieser und beim verriegelnden oder entriegelnden Verdrehen gegenüber dem Füllstutzen zusammen mit dem Dichtring gegen die Dichtfläche des Füllstutzen gedrückt. Da mit dem Verdrehen der Handhabe auch der Dichtring gegenüber dem Füllstutzen verdreht wird, reibt der Dichtring je nach Kraftaufwendung des Benutzers mehr oder weniger an der Dichtfläche des Füllstutzens. Der bekannte Verschlussdeckel ist zwar aufgrund der Dreh-Hubvorrichtung derart ausgestaltet, dass vor bzw. nach der Verschlussstellung an sich ein axiales Spiel zwischen Dichtring und Füllstutzendichtfläche möglich ist, jedoch hängt dessen Vorhandensein von der Anwendung durch den Benutzer ab. Darüber hinaus kann sich eine weitere Erhöhung der Reibung des Dichtringes gegenüber der Füllstutzendichtfläche dann ergeben, wenn durch den Einfluss von Kraftstoff oder heißem Öl der Dichtring aufquillt, so dass das axiale Spiel zusätzlich noch verringert wird. Desweiteren ist die zusätzlich vorzusehende Distanzhülse aufwändig.

Aus der GB 546 775 A ist ferner ein Verschlussdeckel in Form eines an einem Umfangsbereich des Füllstutzens angelenkten Klappdeckels bekannt, der gemäß den Merkmalen des Oberbegriffs des Anspruchs 1 ausgestaltet ist. Nach dem schwenkbaren Bewegen des Verschlussdeckels auf den Füllstutzen liegt der eine Dichtteil mit seinem Dichtring unter seinem Eigengewicht auf der Dichtfläche des Füllstutzens auf und wir dann, ohne sich zu verdrehen, mit Hilfe der von der Handhabe betätigten Dreh-Hubvorrichtung dichtend angedrückt.

Aufgabe der vorliegenden Erfindung ist es deshalb, einen Verschlussdeckel für den Füllstutzen eines Behälters der eingangs genannten Art zu schaffen, der eine Reibung zwischen Verschlussdeckeldichtring und Füllstutzendichtfläche unabhängig von der Anwendung durch den Benutzer verhindert und der einfacher ausgebildet ist.

Zur Lösung dieser Aufgabe sind bei einem Verschlussdeckel für den Füllstutzen eines Behälters die im Anspruch 1 angegebenen Merkmale vorgesehen.

Durch die erfindungsgemäßen Maßnahmen ist erreicht, dass der Dichtring des Verschlussdeckels zusammen mit dem die Drehschlussverbindung beinhaltenden Teil beim Verdrehen des Verschlussdeckels ortsfest, d.h. unverdrehbar gegenüber dem Füllstutzen verbleibt, so dass gleichgültig, ob der Benutzer beim Verdrehen des Verschlussdeckels einen axialen Druck aufwendet oder nicht, keinerlei Reibung zwischen Dichtring und Füllstutzendichtfläche erfolgen kann. Dies bedeutet auch, dass auch bei möglicherweise aufgequollener Dichtung kein zusätzlicher Kraftaufwand beim Verdrehen für den Benutzer notwendig ist. Darüber hinaus ist ein derartiger Verschlussdeckel ohne weiteres bei den derzeit üblichen Ausgestaltungen von Füllstutzen, die üblicherweise mit einer Verriegelungskulisse versehen sind, anwendbar.

Eine vorteilhafte konstruktive Ausgestaltung bezüglich des mit der Drehschlussverbindung versehenen einen Teils und dessen Montage mit der Handhabe ergibt sich aus den Merkmalen nach Anspruch 2.

Vorteilhafte Ausgestaltungen hinsichtlich des mit den Riegelnasen versehenen anderen Teils bzw. der Verbindung der beiden Teile der Dreh-Hubvorrichtung ergeben sich aus den Merkmalen eines oder mehrerer der Ansprüche 3 und 4.

Insbesondere bei einem Verschlussdeckel, der aus einem Kunststoff hergestellt ist, ergeben sich vorteilhafte Ausgestaltungen hinsichtlich der konstruktiven Ausführung der relativen Verdrehbarkeit der beiden Teile zueinander aus den Merkmalen des Anspruchs 5 oder 6.

Da die Riegelnasen einerseits und die Drehschlussverbindungselemente andererseits nicht unmittelbar miteinander zusammenwirken, können diese entsprechend den Merkmalen des Anspruchs 7 in vorteilhafter Weise gleichbreit ausgeführt werden.

Dadurch, dass der Dichtring keinerlei Bewegungsreibung unterliegt, sondern ausschließlich eine axiale Bewegung auf die Füllstutzendichtfläche vollzieht, ist es gemäß den Merkmalen des Anspruchs 8 möglich, diesen als Formteil auszubilden.

Die Erfindung bezicht sich ferner auf eine kombination aus füllstutzen und Verschlussdeckel nach Anspruch 9. Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in auseinandergezogener perspektivischer Darstellung die Einzelbauteile eines Verschlussdeckels für den Füllstutzen eines kraftstoffbehalters gemäß einem bevorzugten Ausführungsbeispiel vorliegender Erfindung,
- Figur 2: einen Längsschnitt durch den Verschlussdeckel nach Figur 1, jedoch in zusammengebautem Zustand und in einem einen Behälterfüllstutzen dicht verschließenden Zustand,
- Figur 3: einen Längsschnitt entsprechend demjenigen der Figur 2, jedoch in einer gegenüber dieser um 90° verdrehten Stellung des Verschlussdeckels und ohne Spannteil und Füllstutzen,

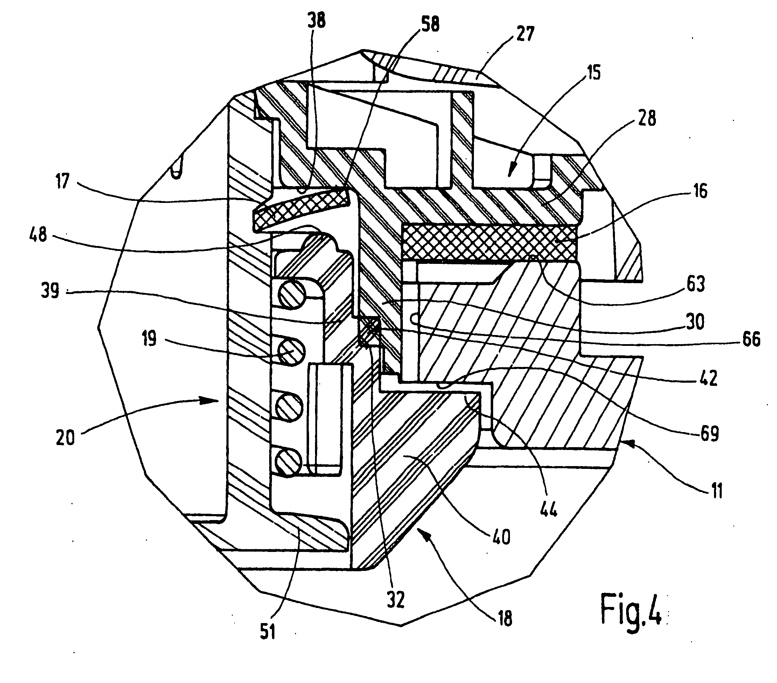

- Figur 4: in vergrößerter Darstellung einen Ausschnitt der Figur 2, jedoch in einer Zwischenstellung des Verschlussdeckels beim Auf- oder Abdrehen auf den bzw. von dem Behälterfüllstutzen.
- Figur 5: in einer der Figur 4 ähnlichen und in weiterer Ausschnittverkleinerung und vergrößerter Darstellung eine den Zustand von Figur 2 zeigende weitere Ausführung vorliegender Erfindung,
- Figur 6: in vergrößerter Darstellung einen Schnitt durch einen Behälterstutzen gemäß einem weiteren Ausführungsbeispiel vorliegender Erfindung zur Verwendung mit einem Verschlussdeckel nach Figur 2 bzw. 3 und
- Figur 7: in vergrößerter Darstellung gemäß Kreisausschnitt VII der Figur 2 in weiterer Ausgestaltung die Dichtungsverbindung von Verschlussdeckel und Füllstutzen.

Der in der Zeichnung dargestellte Verschlussdeckel 10 dient zum gas-flüssigkeits- sowie druckdichten Verschließen eines Füllstutzens 11 eines Behälters 12, insbesondere eines Kraftstoffbehälters für Kraftfahrzeuge, aber auch eines Motorenölbehältnisses für Kraftfahrzeuge und auch für derartige Behältnisse stationärer Anlagen.

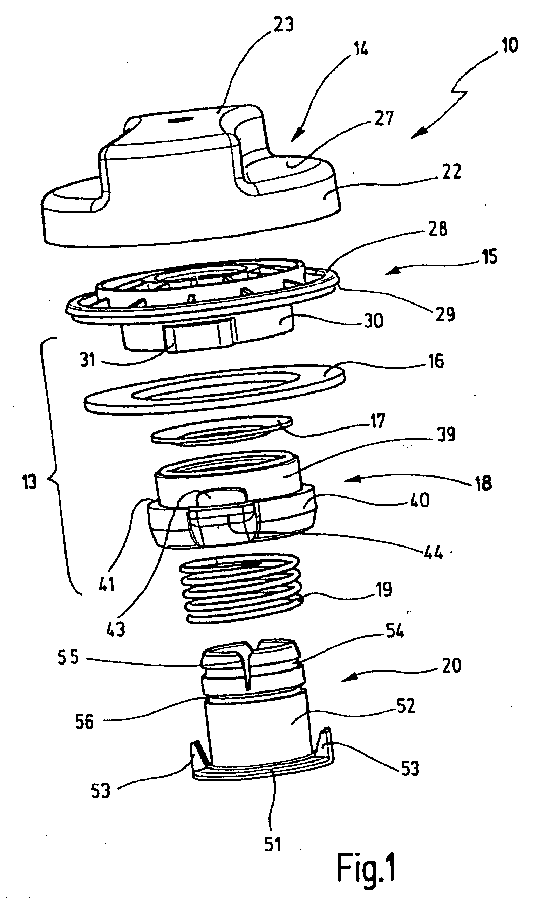

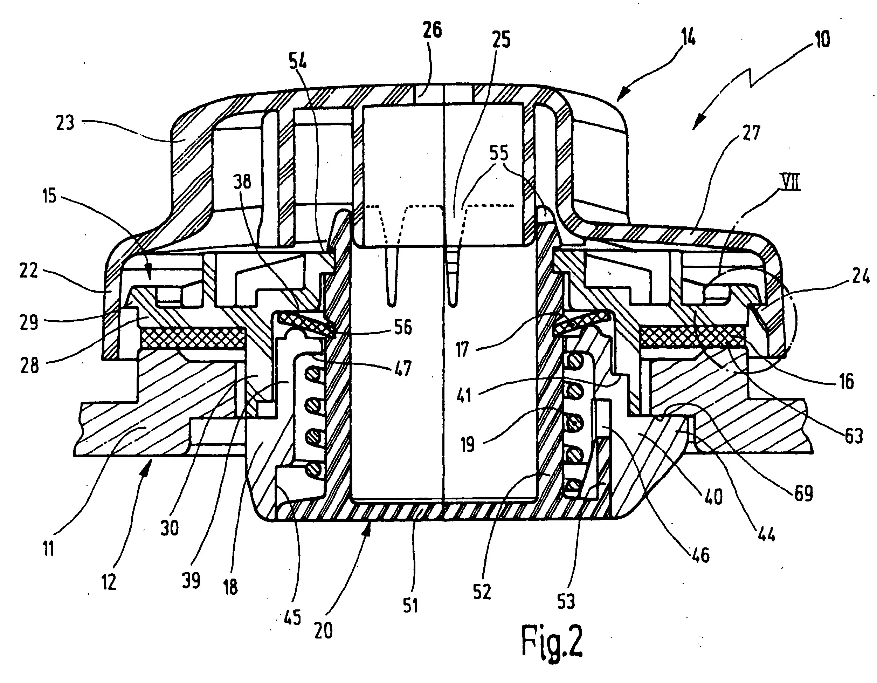

Gemäß Figur 1 besteht der Verschlussdeckel 10 im wesentlichen aus einer Handhabe 14, einem Dichtteil 15 mit Dichtring 16, einer Ringdichtung 17, einem Spannteil 18, einer Druckfeder 19 sowie einer Achse 20. In zusammengebautem Zustand, wie dies in Figur 2 dargestellt ist, durchdringt die Achse die Druckfeder 19 und das Spannteil 18 und ist danach mit der Ringdichtung 17 bestückt. Des Weiteren durchdringt die Achse 20 den Dichtring 16 sowie das mit dem Dichtring 16 versehene Dichtteil 15 und ist mit seinem betreffenden Ende mit dem Dichtteil 15 derart verrastend verbunden, dass sich eine axial feste, jedoch in Umfangsrichtung drehbare Verbindung zwischen Achse 20 und Dichtteil 15 ergibt. Ferner ist das betreffende Ende der Achse 20 mit der Handhabe 14 drehfest verbunden und in axialer Richtung an der Handhabe 14 dadurch festgelegt, dass das Dichtteil 15 in die Unterseite gemäß Figur 1 der Handhabe 14 axial festgelegt und in Umfangsrichtung verdrehbar eingebracht ist.

Die Handhabe 14 ist beim Ausführungsbeispiel einstückig aus Kunststoff hergestellt und besitzt eine etwa topfförmige Unterseite 22 sowie einen Griffknebel 23, der länglich rechteckförmig mit entsprechenden konkaven Seitenbereichen ausgestaltet ist. Innenseitig besitzt die topfförmige Unterseite 22 hier vier über den Innenumfang gleichmäßig verteilt angeordnete bzw. angeformte Rastelemente 24 zur axial festen jedoch verdrehbaren, verrastenden Aufnahme des Dichtteils 15. Außerdem besitzt die Handhabe 14 innenseitig im Bereich des hohlen Griffknebels 23 diagonal aneinander gegenüberliegende, hier vier Stege 25, die der drehfesten Verbindung mit der Achse 20 dienen. Eine Bohrung 26 mittig im Griffknebel 23 dient zur Aufnahme einer Kette oder eines Bandes, um den Verschlussdeckel 10 unverlierbar am betreffenden Füllstutzen oder Behälter zu halten.

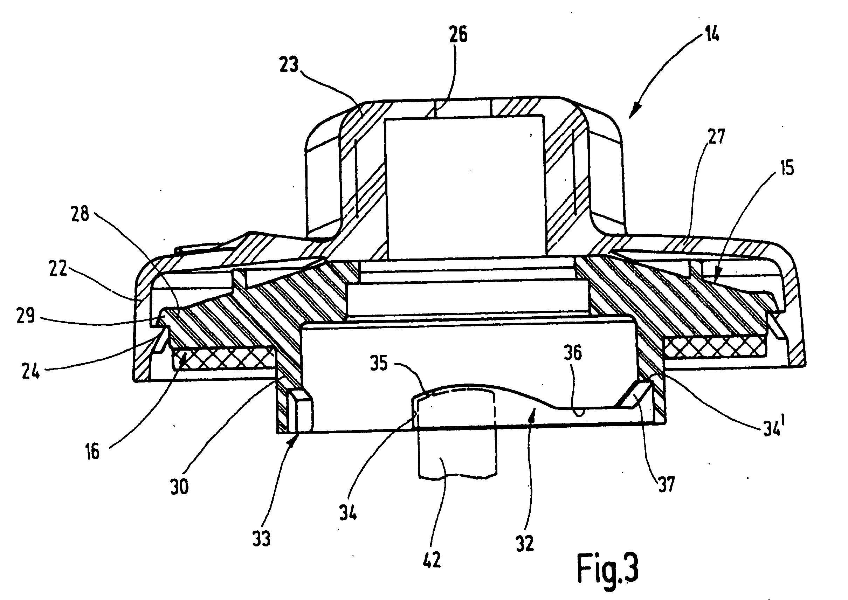

Das Dichtteil 15, das einstückig aus Kunststoff ist, besitzt eine Ringscheibe 28, die mit einem hinterschnittenen Umfangsrand 29 versehen ist, der zur Verrastung in der Handhabe 14 bzw. hinter den Rastelementen 24 der Handhabe 14 dient, derart, dass die Ringscheibe 28 an der Handhabe 14 axial festgehalten ist, wobei sie sich über axiale Streben gegen einen Boden 27 der topfförmigen Unterseite 22 legt und in Umfangsrichtung frei drehbar gehalten ist. Die Ringscheibe 28 ist mit einem zylindrischen Bewegungsübertragungsansatz 30 versehen, dessen Innendurchmesser größer ist als der der zentrischen Bohrung der Ringscheibe 28, so dass sich eine Innenschulter 38 ergibt. Der Bewegungsübertragungsansatz 30 ist an hier zwei diametral gegenüberliegenden Außenumfangsbereichen mit Drehschlussnasen 31 versehen, die radial abstehen, eine bestimmte Breite in Umfangsrichtung besitzen und in axialer Richtung vom freien Ende des Bewegungsübertragungsansatzes 30 ausgehen und einen axialen Raum zwischen sich und der Oberfläche der Ringscheibe 28 freilassen. In diesem Freiraum ist der auf die Ringscheibe 28 aufgelegte Dichtring 16 zwischen dieser und den Drehschlussnasen 31 gehalten. Der Bewegungsübertragungsansatz 30 ist an seiner Innenseite mit zwei identischen diametral gegenüberliegenden Kulissenbahnen 32, 33 versehen, die in axialer Richtung wirken (Figur 3). Die Kulissenbahnen 32, 33 sind in die Wand des Bewegungsübertragungsansatzes 33 in axialer Richtung von dessen freiem Ende her eingebracht, und zwar derart, dass sie etwa die halbe Dicke der Wandung des Bewegungsübertragungsansatzes 30 einnehmen. Jede der Kulissenbahnen 32, 33 beginnt im Bereich einer Seite einer Drehschlussnase 31 und verläuft längs deren Breite über einen Umfangswinkel von 90°. An beiden Enden besitzt die Kulissenbahn 32, 33 einen Endanschlag 34 bzw. 34'. Die Kulissenbahn 32, 33 hat bezüglich ihrer Mitte bei 45° einen symmetrischen Verlauf, d.h., ein erster Bahnabschnitt 35 beginnt am 0°-Anschlag 34 in einer bestimmten axialen Tiefe und geht dann ansteigend in einen zweiten Bahnabschnitt 36 über, der axial gesehen eine geringere Tiefe aufweist und sind zu beiden Seiten der 45°-Mitte gleichmäßig erstreckt; danach schließt sich ein dritter Bahnabschnitt 37 an, der symmetrisch zum ersten Bahnabschnitt und damit absteigend verläuft und am anderen 90°-Anschlag 34' endet. Die beiden Kulissenbahnen Bahnabschnitt 32 und 33 sind um 180° umfangsseitig zueinander versetzt.

Das Spannteil 18, dass ebenfalls einstückig aus Kunststoff ist, besitzt einen außen durchmesserkleineren ersten Ringabschnitt 39 und einen außendurchmessergrößeren zweiten Ringabschnitt 40, von denen der erstere in montiertem Zustand in den Bewegungsübertragungsansatz 30 des Dichtteils 15 eintaucht und dort in axialer und in Umfangsrichtung beweglich geführt gehalten ist. Mit seiner Schulter 41 zwischen den beiden Ringabschnitten 39 und 40 liegt das Spannteil 18 auf der freien Stirn des Bewegungsübertragungsansatzes 30 in montiertem Zustand auf. In diesem Zustand, bspw. gemäß Figur 2, tauchen zwei Nocken 42 und 43, die außenumfangsseitig diametral vom ersten Ringabschnitt 39 radial und von der Schulter 41 axial ausgehend angeformt sind, in die jeweilige Kulissenbahn 32 bzw. 33 im Dichtteil 15 ein.

Wie noch zu beschreiben sein wird, wird das Spannteil 18 bei einer Relativbewegung 90° gegenüber dem Dichtteil 15 aufgrund seiner Nocken 42, 43 und der Kulissenbahnen 32, 33 in axialer Richtung hin und her bewegt. Somit bilden das Dichtteil 15 und das Spannteil 18 eine Dreh-Hubvorrichtung 13.

Im Umfangsbereich der Nocken 42, 43 besitzt der zweite Ringabschnitt 40 diametral gegenüberliegende radial von seiner Umfangsseite abstehende Riegelnasen 44, die in montiertem Ausgangszustand in axialer Richtung mit den Drehschlussnasen 31 des Dichtteils 15 fluchten. Beim Ausführungsbeispiel ist deshalb die Umfangsbreite der Riegelnasen 44 gleich der Umfangsbreite der Drehschlussnasen 31.

Innenumfangsseitig ist der zweite Ringabschnitt 40 mit einer ringförmigen Ausnehmung 45 sowie mit zwei diametral gegenüberliegenden axialen Nuten 46 versehen. Beide Ausnehmungen 45 und 46 verlaufen radial gesehen über einen Teil der Wanddicke des zweiten Ringabschnitt 40. Die ringförmige Ausnehmung 45 geht von der freien Ringstirn des zweiten Ringabschnitts 40 aus und die Nuten 46 schließen sich daran an, Die axialen Nuten 46 liegen umfangsseitig im Bereich der Riegelnasen 44.

Die Achse 20 aus Kunststoff ist hohl und besitzt an einem Ende eine Deckplatte 51, deren Durchmesser größer als der Außendurchmesser eines Zylinderabschnitts 52 der Achse 20, wobei beide Teile konzentrisch zueinander angeordnet sind. Der Durchmesser der Deckplatte 51 ist derart, dass sie in die ringförmige Ausnehmung 45 des zweiten Ringabschnitts 40 des Spannteils 18 axial beweglich eintauchen kann. An diametral gegenüberliegenden Bereichen der Deckplatte 51 sind von deren Unterseite axial abstehende Finger 53 vorgesehen, die in die axialen Nuten 46 des zweiten Ringabschnitts 40 des Spannteils 18 eintauchen können, wodurch das Spannteil 18 auf der Achse 20 einerseits drehfest andererseits jedoch axial beweglich gehalten ist. Zwischen der Deckplatte 51 und einer Innenschulter 47 des ersten Ringabschnitts 39 des Spannteils 18 ist die Druckfeder 19, die den Zylinderabschnitt 52 der Achse 20 umgibt, gehalten.

Der Zylinderabschnitt 52 der Achse 20 besitzt an seinem freien Ende einerseits eine Rastringnut 54, die den Innenrand der Ringscheibe 28 des Dichtteils 15 axial fest, jedoch umfangsseitig verdrehbar aufnimmt. Außerdem besitzt dieses Ende hier vier einander diametral paarweise gegenüberliegende axiale Schlitze 45, in die zur drehfesten Verbindung die Stege 25 der Handhabe 14 eingreifen. Des Weiteren ist am Zylinderabschnitt 52 der Achse 20 in axialem Abstand zur Rastringnut 54 eine Aufnahmeringnut 56 vorgesehen, in der die Ringdichtung bzw. Gummidichtung 17 aufgenommen ist und noch zu beschreibender Weise eine Behälterbelüftung bei Unterdruck vorsieht.

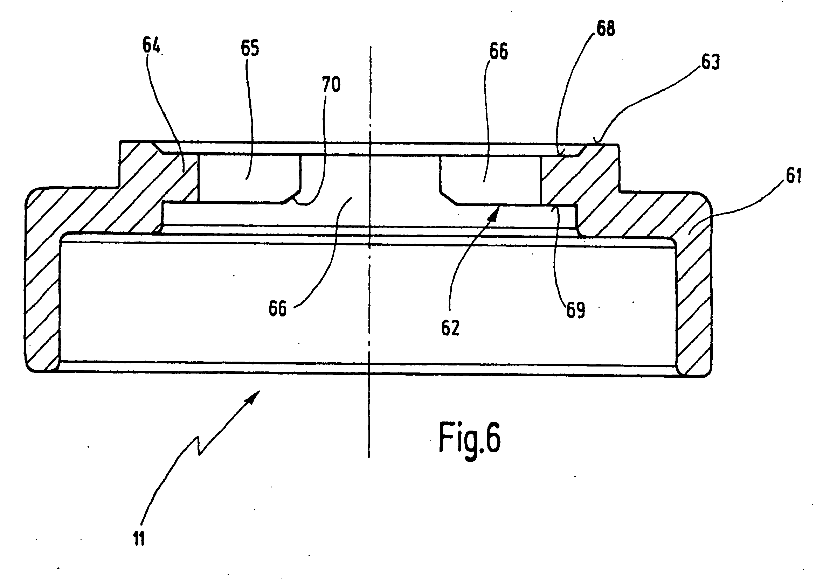

Figur 6 zeigt in Verbindung mit Figur 2 einen Füllstutzen 11 bzw. ein Ansatzende eines Füllstutzens, der übliche äußere Abmessungen aufweist. Der Füllstutzen 11 besitzt ein Rohrteil 61, das entweder in den betreffenden Behälter übergeht oder an einer Füllrohrverlängerung vom Behälter 12 her befestigt ist. Das Rohrteil 61 verjüngt sich an seinem freien Ende zu einem Verschlusssockel 62, der eine die Stutzenöffnung 66 umgebende Ringdichtfläche 63 besitzt, an die sich radial nach innen und axial versetzt ein Riegelrand 64 anschließt. Dieser Riegelrand 64 ist an zwei diametral gegenüberliegenden Bereichen mit einer radialen Ausnehmung 65, 66 versehen, in die beim Aufsetzen des Verschlussdeckels 10 die miteinander fluchtenden Drehschlussnasen 31 und Riegelnasen 44 eintauchen. Beim dargestellten Ausführungsbeispiel ist die Ringdichtfläche 63, an die sich der Dichtring 16 am Dichtteil 15 anlegt, als ebene plane Fläche ausgebildet. Der Riegelrand 64 besitzt außer einer planen Oberseite 68 insbesondere auch eine plane bzw. ebene Unterseite 69. Die axiale Dicke des Riegelrandes 64 entspricht etwa der axialen Höhe der Drehschlussnasen 31 des Dichtteils 15. Die Unterseite 69 besitzt am Übergang zum Innenumfang des Riegelrandes 64 eine Fase 70.

Wird der montierte Verschlussdeckel 10 in Ausgangsstellung, in der die Drehschlussnasen 31 des Dichtteils 15 und die Riegelnasen 44 des Spannteils 18 axial übereinanderliegen, d.h. fluchten, auf diesen Füllstutzen 11 aufgesetzt, gelangen die Drehschlussnasen 31 in die radialen Ausnehmungen 65 des Riegelrandes 64 des Verschlusssockels 62 und sind dort mit umfangsseitigem Spiel aufgenommen und die Riegelnasen 44 bis unter den Riegelrand 64. Mit dem Verdrehen des Verschlussdeckels 10 an dem Griffknebel 23 der Handhabe 14 wird das Dichtteil 15 festgehalten, so dass auch der Dichtring 16 selbst unverdrehbar bleibt. Da das Spannteil 18 mit der Handhabe 14 drehfest verbunden ist und vom Riegelrand 64 frei ist, verdreht sich das Spannteil 18 gegenüber dem Dichtteil 15, was zur Folge hat, dass die Dreh-Hubvorrichtung 13 zur Wirkung kommt. Mit anderen Worten, die Nocken 42 und 43 des Spannteils 18 bewegen sich längs der Kulissenbahnen 32 und 33 des feststehenden Dichtteils 15, so dass sich das Spannteil 18 entgegen der Wirkung der Druckfeder 19 in Richtung zur Deckplatte 51 der Achse 20 und längs der Achse 20 axial bewegt. Dadurch bewegen sich die Riegelnasen 44 in einem axialen Abstand zur Unterseite 69 des Riegelrandes 64 in Umfangsrichtung längs dieser Unterseite 69. Am Ende dieser über 90° erfolgenden Drehbewegung des Spannteils 18 gelängen die Nocken 42 und 43 vom die axiale Bewegung bewirkt habenden zweiten Bahnabschnitt 36 in den tieferliegenden dritten Bahnabschnitt 37 unter der Wirkung der Druckfeder 19, was bedeutet, dass die Riegelnasen 44 auf die Unterseite 69 des Riegelrandes 64 aktiv gedrückt werden und dadurch der Dichtring 16 in axialer Richtung auf die Ringdichtfläche 63 des Verschlusssockels 62 des Füllstutzens 11 abdichtend gedrückt wird. In dieser Verschlussstellung gemäß Figur 2 sind die Riegelnasen 44 gegenüber den Drehschlussnasen 31 um 90° versetzt.

Das Lösen des Verschlussdeckels 10 vom Füllstutzen 11 erfolgt in entsprechend umgekehrte Weise, wobei wiederum das Spannteil 18 mit seinen Riegelnasen 48 in axialer Richtung vom Verschlusssockel 62 abgehoben und nach einer entgegengesetzten 90°-Verdrehung am Dichtteil 15 abgesetzt wird. Dies bedeutet, dass der Dichtring 16 gegenüber der Ringdichtfläche 63 des Füllstutzens 11 stets nur eine axiale Bewegung, jedoch keine Drehbewegung gegenüber dieser vollzieht. Entsprechend der Ausgestaltung des ersten und dritten Bahnabschnittes 35, 37 kann die Absetzbewegung des Spannteils hörbar rastend sein.

Wesentlich in diesem Zusammenhang ist, dass der Füllstutzen 11 auf diese Weise aus einem Form- bzw. Gussteil hergestellt werden kann, wobei die planen Flächen 63 und 69 entweder durch das Herstellen des Gussteils oder durch Nachbearbeitung entstehen können. Da der Dichtring 16 durch die aktive axiale Bewegung an die plane Ringdichtfläche 63 angedrückt wird, ist es nicht - wie bei den bisher üblichen Füllstutzen notwendig, eine durch Wölben vorgesehene schmalere Dichtfläche vorzusehen.

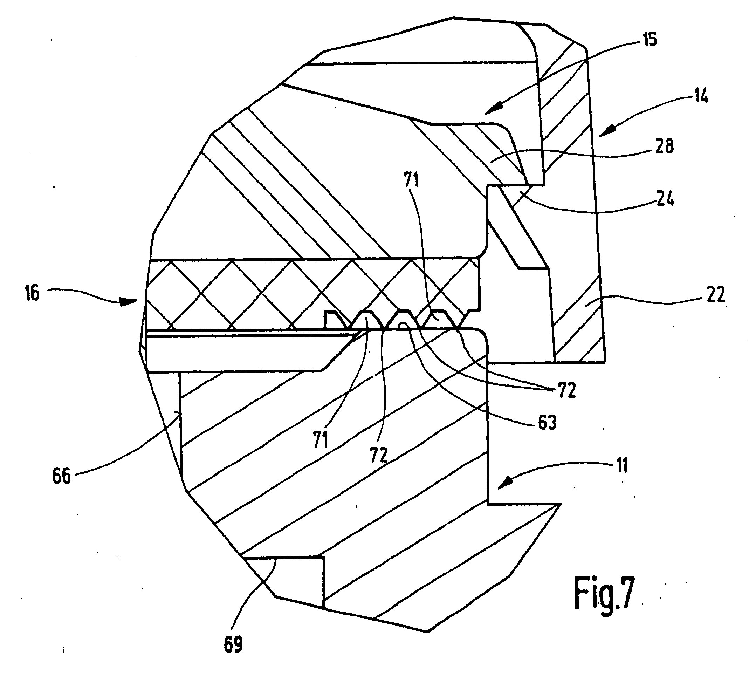

Gemäß dem Ausführungsbeispiel der Figur 7 kann deshalb der Dichtring 16 als Formteil ausgebildet sein, wobei der reine Dichtflächenbereich in diesem Falle durch Ringnuten 71 unterbrochen sein kann, so dass ringförmige Dichtflächenbereiche 72 bestehen bleiben, die mit der Ringdichtfläche 63 des Füllstutzens 11 in gasdichte, flüssigkeitsdichte und druckdichte Verbindung treten können. Dies erfolgt über eine relativ breite Ringdichtfläche am Füllstutzen 11 von bspw. mehrere mm Breite.

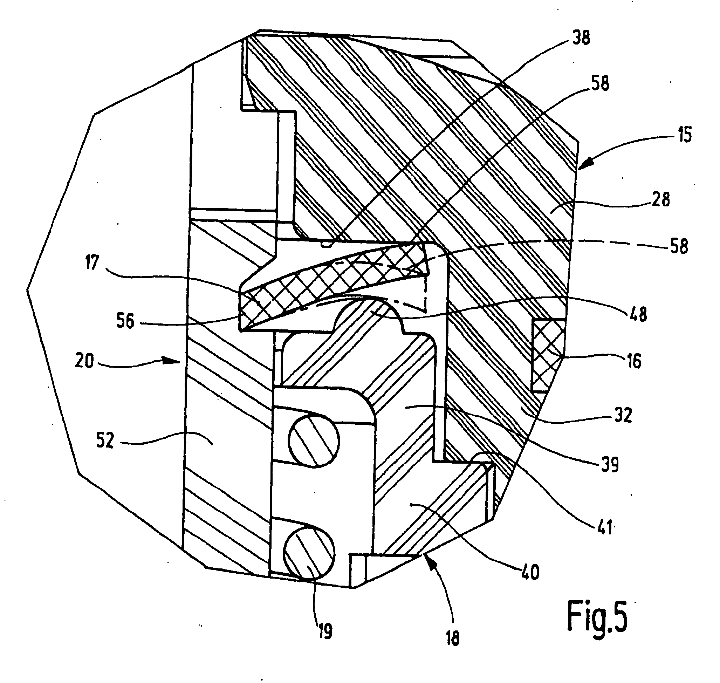

Aus Figur 5 ist gemäß einem weiteren Ausführungsbeispiel die Wirkung der Ringdichtung 17, die als Gummidichtung ausgebildet ist, ersichtlich. Diese Gummidichtung 17, die am Zylinderabschnitt 52 der Achse 20 in dessen Aufnahmeringnut 56 gehalten ist, ist derart ausgebildet, dass sie sich in radialer Richtung zur Innenschulter 38 des Dichtteils 15, die hier eine axiale Dichtfläche bildet, hin konvex wölbt und dort mit ihrem Außenrandbereich 58 unter Eigenspannung anlegt(ausgezogene Linien). Axial gegenüber liegend ist am Spannteil 18 bzw. an der Stirnseite von dessen erstem Ringabschnitt 39 ein axial vorstehender Ringwulst 48 vorgesehen, der in montiertem Zustand in einem geringer axialen Abstand zur Gummidichtung 17 liegt. Dieser Ringwulst 48 dient dann, wenn im mit dem Füllstutzen 11 verbundenen Behälter 12 ein Unterdruck aufgebaut wird, dazu, den Behälter 12 zu belüften. Entsteht ein Unterdruck, so wird der außenseitige Randbereich der Ringdichtung 17 angesaugt und gegen den Ringwulst 48 gelegt, und möglicherweise etwas über diesen Ringwulst 48 rückgebogen, wodurch die Dichtfläche 58 der Ringdichtung 17 von der Dichtfläche der Innenschulter 38 des Dichtteils 15 abhebt (strichpunktierte Linien) und dadurch eine Luftverbindung zwischen dem Außenbereich und dem Innenbereich des Behälters 12 schafft. Je nach radialer Lage und axialer Nähe des Ringwulstes 48 zur Gummidichtung 17 kann die Höhe des Unterdrucks im Behälter 12 gewählt werden, zu dem eine Auslenkung der Gummidichtung 17 und damit eine Belüftung des Behälters 12 stattfindet.

Es versteht sich, dass der vorbeschriebene Verschlussdeckel 10 nicht nur bei dem gemäß Figur 6 beschriebenen Füllstutzen 11 sondern auch bei den derzeit üblichen Füllstutzen Verwendung finden kann, die insbesondere mit einer innenseitigen Kulissenbahn am Riegelrand 64 für handelsübliche Verschlussdeckel versehen sind.

## Patentansprüche

1. Verschlussdeckel (10) für den Füllstutzen (11) eines Behälters (12), insbesondere eines solchen für Kraftstoff oder Motorenöl für bspw. Kraftfahrzeuge, mit einer Handhabe (14) und mit einer Dreh-Hubvorrichtung (13), deren der Handhabe (14) zugewandte eine Teil (Dichtteil 15) mit einem Dichtring (16) versehen ist und deren der Handhabe (14) abgewandte mit Riegelnasen (44) zum Untergreifen eines Verschlusssockels (62) des Füllstutzens (11) versehene andere Teil (Spannteil 18) bei einer Drehbewegung des Verschlussdeckels (10) gegenüber dem Füllstutzen (11) verdrehbar ist, wobei der andere Teil (Spannteil 18) gegenüber dem einen Teil (Dichtteil 15) der Dreh-Hubvorrichtung (13) bei der Drehbewegung der Handhabe (14) gegen die Kraft einer Feder (19) axial derart bewegbar ist, dass in der Verschlusslage des Verschlussdeckels (10) am Füllstutzen (11) der am einen Teil (Dichtteil 15) vorgesehene Dichtring (16) gegen eine Dichtfläche (63) des Füllstutzens (11) gedrückt ist und während der Bewegung der Handhabe (14) ein axiales Spiel zwischen den Dichtflächen yon Dichtring (16) und Füllstutzen (11) besteht, und wobei das eine Teil (Dichtteil 15) und das andere Teil (Spannteil 18) von einer Achse (20) durchdrungen sind, die einenends mit der Handhabe (14) und anderenends mit dem anderen Teil (Spannteil 18) drehschlüssig verbunden ist, so dass das eine Teil (Dichtteil 15) mit dem axial wirkenden Dichtring (16) bei einer Drehbewegung des Verschlussdeckels (10) gegenüber dem Füllstutzen (11) durch eine Drehschlussverbindung (31, 65) mit diesem unverdrehbar verbleibt, **dadurch gekennzeichnet, dass** die Achse (20) ein mit einer Deckplatte (51) versehener zylindrischer Körper (52) ist, dessen offenes Ende mittels über Stege (25) der Handhabe (14) greifende axiale Schlitze (55) mit der Handhabe (14) einerseits und dessen geschlossenes Ende mittels von der Deckplatte (51) axial abstehende und in innere axiale Aussparungen (46) des anderen Teils (Spannteils 18) eingreifende Finger (53) mit dem anderen Teil andererseits eine Drehschlussverbindung bildet.

2. Verschlussdeckel nach Anspruch 1, **dadurch gekennzeichnet, dass** das mit mindestens einem Drehverschlussverbindungselement (31) versehene eine Teil (Dichtteil 15) mit einem radialen Flansch (28) fest verbunden ist, der in der Handhabe (14) zwar axial unbeweglich jedoch verdrehbar gehalten ist.

3. Verschlussdeckel nach Anspruch 1 oder 2, **dadurch gekennzeichnet, dass** das mit den Riegelnasen (44) versehene andere Teil (Spannteil 18) als Ringelement (39, 40) ausgebildet und in ein Ringelement (30) des einen Teils (Dichtteil 15) teilweise axial eintauchend angeordnet ist.

4. Verschlussdeckel nach Anspruch 3, **dadurch gekennzeichnet, dass** die beiden Ringelemente (30; 39, 40) an ihren ineinander tauchenden Bereichen mit in Drehrichtung wirkenden Kulissenelementen (32, 33) in Form mindestens einer Kulissenbahn und mindestens einer Nocke (42, 43) versehen sind.

5. Verschlussdeckel nach Ansprüch 3 oder 4, **dadurch gekennzeichnet, das** zwischen dem anderen Teil (Spannteil 18) und der Achse (20) die Feder in Form einer Druckfeder angeordnet ist.

6. Verschlussdeckel nach Anspruch 5, **dadurch gekennzeichnet, dass** die Achse (20) mit dem einen Teil (Dichtteil 15) eine axial wirkende Rastverbindung eingeht.

7. Verschlussdeckel nach mindestens einem der vorhergehenden Ansprüche, **dadurch gekennzeichnet, dass** die Riegelnasen (44) des anderen Teils (Spannteil 18) und die Drehschlussverbindungselemente (31) des einen Teils (Dichtteil 15) etwa die selbe Breite in Umfangsrichtung besitzen.

8. Verschlussdeckel nach mindestens einem der vorhergehenden Ansprüche, **dadurch gekennzeichnet, dass** der Dichtring (16) als Formteil mit ggf. dem Füllstutzen (11) zugewandten gezahnten Dichtflächenbereichen ausgebildet ist.

9. Kombination ans einem Füllstutzen (11) eines Behälters (12) , insbesondere eines solchen für Kraftstoff oder Motorenöl für bspw. Kraftfahrzeuge, und einem auf den füllstutzen (11) axial aufsetzbaren Verschlussdeckel (10), wobei der Füllstutzen (11) mit einem Riegelrand (64) versehen ist und der Verschlussdeckel mit einer Handhabe (14) und mit einer Dreh-Hubvorrichtung (13), deren der Handhabe (14) zugewandte eine Teil (Dichtteil 15) mit einem Dichtring (16) versehen ist und deren der Handhabe (14) abgewandte mit Riegelnasen (44) zum Untergreifen des Riegelrandes (64) eines Verschlusssockels (62) des Füllstutzens (11) versehene andere Teil (Spannteil 18) bei einer Drehbewegung des Verschlussdeckels (10) gegenüber dem Füllstutzen (11) verdrehbar ist, wobei der andere Teil (Spannteil 18) gegenüber dem einen Teil (Dichtteil 15) der Dreh-Hubvorrichtung (13) bei der Drehbewegung der Handhabe (14) gegen die Kraft einer Feder (19) axial derart bewegbar ist, dass in der Verschlusslage des Verschlussdeckels (10) am Füllstutzen (11) der am einen Teil (Dichtteil 15) vorgesehene Dichtring (16) gegen eine Dichtfläche (63) des Füllstutzens (11) gedrückt ist und während der Bewegung der Handhabe (14) ein axiales Spiel zwischen den Dichtflächen von Dichtring (16) und Füllstutzen (11) besteht, und wobei das eine Teil (Dichtteil 15) und das andere Teil (Spannteil 18) von einer Achse (20) durchdrungen sind, die einenends mit der Handhabe (14) und anderenends mit dem anderen Teil (Spannteil 18) drehschlüssig verbunden ist, so dass das eine Teil (Dichtteil 15) mit dem axial wirkenden Dichtring (16) bei einer Drehbewegung des Verschlussdeckels (10) gegenüber dem Füllstutzen (11) durch eine Drehschlussverbindung (31, 65) mit diesem unverdrehbar verbleibt, **dadurch gekennzeichnet, dass** die Achse (20) ein mit einer Deckplatte (51) versehener zylindrischer Körper (52) ist, dessen offenes Ende mittels über Stege (25) der Handhabe (14) greifende axiale Schlitze (55) mit der Handhabe (14) einerseits und dessen geschlossenes Ende mittels von der Deckplatte (51) axial abstehende und in innere axiale Aussparungen (46) des anderen Teils (Spannteils 18) eingreifende Finger (53) mit dem anderen Teil andererseits eine Drehschlussverbindung bildet.

## Claims

1. A closure cap (10) for the filler neck (11) of a container (12), in particular of a container for fuel or motor oil for motor vehicles, for instance, having a grip (14) and having a rotary lifting device (13) whose one part (sealing part 15), oriented toward the grip (14), is provided with a sealing ring (16) and whose other part (tightening part 18), remote from the grip (14) and provided with a locking lugs (44) for engaging a closure base (62) of the filler neck (11) from below is rotatable relative to the filler neck (11) upon a rotary motion of the closure cap (10), and upon the rotary motion of the grip (14), the other part (tightening part 18) is axially movable relative to the one part (tightening part 15) of the rotary lifting device (13) counter to the force of a spring (19), in such a manner that in the closing position of the closure cap (10) on the filler neck (11), the sealing ring (16) provided on the one part (sealing part 15) is pressed against a sealing face (63) of the filler neck (11), and during the motion of the grip (14), an axial play exists between the sealing faces of the sealing ring (16) and of the filler neck (11), and whereby the one part (sealing part 15) and the other part (tightening part 18) are penetrated by a shaft (20), which is connected in a manner fixed against relative rotation to the grip (14) on one end and to the other part (tightening part 18) on the other, so that the one part (sealing part 15) with the axially acting sealing ring (16), upon a rotary motion of the closure cap (10) relative to the filler neck (11), remains nonrotatable with the filler neck by means of a rotation-locking connection (31, 65), **characterized in that** the shaft (20) is a cylindrical body (52), which is provided with a cover plate (51) and whose open end, by means of axial slots (55) engaging via ribs (25) of the grip (14), forms a rotation-locking connection with the grip (14) on the one hand, and whose closed end, by means of fingers (53) axially protruding from the cover plate (51) and engaging inner axial recesses (46) of the other part (tightening part 18), forms a rotation-locking connection with the other part on the other hand.

2. The closure cap as defined by claim 1, **characterized in that** the one part (sealing part 15), provided with at least one rotation-locking connection element (31), is solidly connected to a radial flange (28) which is retained axially immovably but rotatably in the grip (14).

3. The closure cap as defined by claim 1 or 2, **characterized in that** the other part (tightening part 18), provided with the locking lugs (44), is embodied as a ring element (39, 40) and is disposed plunging axially partway into a ring element (30) of the one part (sealing part 15).

4. The closure cap as defined by claim 3, **characterized in that** the two ring elements (30; 39, 40), on their regions plunging into one another, are provided with sliding-block elements (32, 33), acting in the direction of rotation, in the form of at least one sliding-block path and at least one cam (42, 43).

5. The closure cap as defined by claim 3 or 4, **characterized in that** the spring is disposed in the form of a compression spring between the other part (tightening part 18) and the shaft (20).

6. The closure cap as defined by claim 5, **characterized in that** the shaft (20) enters into an axially acting detent connection with the one part (sealing part 15) .

7. The closure cap as defined by at least one of the foregoing claims, **characterized in that** the locking lugs (44) of the other part (tightening part 18) and the rotation-locking connection elements (31) of the one part (sealing part 15) each have approximately the same width in the circumferential direction.

8. The closure cap as defined by at least one of the foregoing claims, **characterized in that** the sealing ring (16) is embodied as a molded part, with toothed sealing face regions optionally oriented toward the filler neck (11).

9. Combination of a filler neck (11) of a container (12), in particular of a container for fuel or motor oil for motor vehicles, for instance, and a closure cap (10) being axially detachable on the filler neck (11), whereby the filler neck (11) is provided with a locking edge (64) and the closure cap having a grip (14) and having a rotary lifting device (13) whose one part (sealing part 15), oriented toward the grip (14), is provided with a sealing ring (16) and whose other part (tightening part 18), remote from the grip (14) and provided with a locking lugs (44) for engaging the locking edge (64) of a closure base (62) of the filler neck (11) from below is rotatable relative to the filler neck (11) upon a rotary motion of the closure cap (10), and upon the rotary motion of the grip (14), the other part (tightening part 18) is axially movable relative to the one part (tightening part 15) of the rotary lifting device (13) counter to the force of a spring (19), in such a manner that in the closing position of the closure cap (10) on the filler neck (11), the sealing ring (16) provided on the one part (sealing part 15) is pressed against a sealing face (63) of the filler neck (11), and during the motion of the grip (14), an axial play exists between the sealing faces of the sealing ring (16) and of the filler neck (11), and whereby the one part (sealing part 15) and the other part (tightening part 18) are penetrated by a shaft (20), which is connected in a manner fixed against relative rotation to the grip (14) on one end and to the other part (tightening part 18) on the other, so that the one part (sealing part 15) with the axially acting sealing ring (16), upon a rotary motion of the closure cap (10) relative to the filler neck (11), remains nonrotatable with the filler neck by means of a rotation-locking connection (31, 65), **characterized in that** the shaft (20) is a cylindrical body (52), which is provided with a cover plate (51) and whose open end, by means of axial slots (55) engaging via ribs (25) of the grip (14), forms a rotation-locking connection with the grip (14) on the one hand, and whose closed end, by means of fingers (53) axially protruding from the cover plate (51) and engaging inner axial recesses (46) of the other part (tightening part 18), forms a rotation-locking connection with the other part on the other hand.

## Revendications

1. Bouchon de fermeture (10) pour la tubulure de remplissage (11) d'un réservoir, en particulier d'un réservoir de carburant ou d'huile moteur pour des véhicules automobiles, par exemple, comportant une poignée (14) et un dispositif de rotation et levage (13), dont une partie (partie étanche 15), orientée vers la poignée (14), est munie d'une bague d'étanchéité (16) et dont l'autre partie (partie de serrage 18), détournée de la poignée (14) et munie de becs de verrouillage (44) destinés à s'engager en dessous d'un socle de fermeture (62) de la tubulure de remplissage (11), est apte à tourner lors d'un mouvement de rotation du bouchon de fermeture (10) par rapport à la tubulure de remplissage (11), sachant que l'autre partie (partie de serrage 18) par rapport à l'une des parties (partie étanche 15) du dispositif de rotation et levage (13) peut, lors du mouvement de rotation de la poignée (14) dans le sens opposé à la force d'un ressort (19), être déplacée dans le sens axial, de telle sorte que, dans la position de fermeture du bouchon de fermeture (10) sur la tubulure de remplissage (11), la bague d'étanchéité (16), prévue sur l'une des parties (partie étanche 15), est poussée contre une surface d'étanchéité (63) de la tubulure de remplissage (11) et, pendant le mouvement de la poignée (14), il existe un jeu axial entre les surfaces d'étanchéité de la bague d'étanchéité (16) et la tubulure de remplissage (11), et sachant que l'une des parties (partie étanche 15) et l'autre partie (partie de serrage 18) sont traversées par un axe (20), dont une extrémité est reliée de manière solidaire en rotation avec la poignée (14), et dont l'autre extrémité est reliée de manière solidaire en rotation avec l'autre partie (partie de serrage (18), de telle sorte que l'une des parties (partie étanche 15), munie de la bague d'étanchéité (16) agissant dans le sens axial, reste, pendant un mouvement de rotation du bouchon de fermeture (10) par rapport à la tubulure de remplissage (11), immobile en rotation avec celle-ci par l'intermédiaire d'un système d'assemblage immobile en rotation (31 ; 65), **caractérisé en ce que** l'axe (20) est un corps cylindrique (52), qui est muni d'une plaque de recouvrement (51) et dont l'extrémité ouverte, au moyen de fentes (55) axiales s'engageant sur des barrettes (25) de la poignée (14), forme avec la poignée (14), d'une part, et dont l'extrémité fermée, au moyen de doigts (53), s'éloignant axialement de la plaque de recouvrement (51) et s'engageant dans des évidements (46) axiaux intérieurs de l'autre partie (partie de serrage 18), forme avec l'autre partie, d'autre part, un système d'assemblage immobile en rotation.

2. Bouchon de fermeture selon la revendication 1, **caractérisé en ce que** l'une des parties (partie étanche 15), munie d'au moins un élément d'assemblage immobile en rotation (31), est reliée de manière fixe à une bride (28) radiale, qui est maintenue dans la poignée (14) de manière immobile dans le sens axial certes, mais de manière à pouvoir tourner.

3. Bouchon de fermeture selon la revendication 1 ou 2, **caractérisé en ce que** l'autre partie (partie de serrage 18), munie des becs de verrouillage (44), est réalisée sous forme d'élément annulaire (39, 40) et est disposée en pénétrant partiellement dans le sens axial dans un élément annulaire (30) de l'une des parties (partie étanche 15).

4. Bouchon de fermeture selon la revendication 3, **caractérisé en ce que** les deux éléments annulaires (30 ; 39, 40), au niveau de leurs zones pénétrant l'une dans l'autre, sont munis d'éléments de coulisse (32, 33) agissant dans le sens de rotation et réalisés sous la forme d'au moins une voie de coulisse et d'au moins un ergot (42, 43).

5. Bouchon de fermeture selon la revendication 3 ou 4, **caractérisé en ce que** le ressort, sous la forme d'un ressort de pression, est agencé entre l'autre partie (partie de serrage 18) et l'axe (20).

6. Bouchon de fermeture selon la revendication 5, **caractérisé en ce que** l'axe (20) forme avec l'une des parties (partie étanche 15) un assemblage bloqué agissant dans le sens axial.

7. Bouchon de fermeture selon au moins l'une quelconque des revendications précédentes, **caractérisé en ce que** les becs de verrouillage (44) de l'autre partie (partie de serrage 18) et les éléments d'assemblage immobile en rotation (31) de l'une des parties (partie étanche 15) ont sensiblement la même largeur dans le sens périphérique.

8. Bouchon de fermeture selon au moins l'une quelconque des revendications précédentes, **caractérisé en ce que** la bague d'étanchéité (16) est réalisée sous la forme d'une pièce moulée avec éventuellement des zones d'étanchéité dentées orientées vers la tubulure de remplissage (11).

9. Combinaison formée par une tubulure de remplissage (11) d'un réservoir (12), en particulier d'un réservoir de carburant ou d'huile moteur pour des véhicules automobiles, par exemple, et par un bouchon de fermeture (10), propre à être posé dans le sens axial sur la tubulure de remplissage (11), sachant que la tubulure de remplissage (11) est munie d'un bord de verrouillage (64) et le bouchon de fermeture (10) comporte une poignée (14) et un dispositif de rotation et levage (13), dont une partie (partie étanche 15), orientée vers la poignée (14), est munie d'une bague d'étanchéité (16) et dont l'autre partie (partie de serrage 18), détournée de la poignée (14) et munie de becs de verrouillage (44) destinés à s'engager en dessous du bord de verrouillage (64) d'un socle de fermeture (62) de la tubulure de remplissage (11), est apte à tourner lors d'un mouvement de rotation du bouchon de fermeture (10) par rapport à la tubulure de remplissage (11), sachant que l'autre partie (partie de serrage 18) par rapport à l'une des parties (partie étanche 15) du dispositif de rotation et levage (13) peut, lors du mouvement de rotation de la poignée (14) dans le sens opposé à la force d'un ressort (19), être déplacée dans le sens axial, de telle sorte que, dans la position de fermeture du bouchon de fermeture (10) sur la tubulure de remplissage (11), la bague d'étanchéité (16), prévue sur l'une des parties (partie étanche 15), est poussée contre une surface d'étanchéité (63) de la tubulure de remplissage (11) et, pendant le mouvement de la poignée (14), il existe un jeu axial entre les surfaces d'étanchéité de la bague d'étanchéité (16) et la tubulure de remplissage (11), et sachant que l'une des parties (partie étanche 15) et l'autre partie (partie de serrage 18) sont traversées par un axe (20), dont une extrémité est reliée de manière solidaire en rotation avec la poignée (14), et dont l'autre extrémité est reliée de manière solidaire en rotation avec l'autre partie (partie de serrage (18), de telle sorte que l'une des parties (partie étanche 15), munie de la bague d'étanchéité (16) agissant dans le sens axial, reste, pendant un mouvement de rotation du bouchon de fermeture (10) par rapport à la tubulure de remplissage (11), immobile en rotation avec celle-ci par l'intermédiaire d'un système d'assemblage immobile en rotation (31 ; 65), **caractérisé en ce que** l'axe (20) est un corps cylindrique (52), qui est muni d'une plaque de recouvrement (51) et dont l'extrémité ouverte, au moyen de fentes (55) axiales s'engageant sur des barrettes (25) de la poignée (14), forme avec la poignée (14), d'une part, et dont l'extrémité fermée, au moyen de doigts (53), s'éloignant axialement de la plaque de recouvrement (51) et s'engageant dans des évidements (46) axiaux intérieurs de l'autre partie (partie de serrage 18), forme avec l'autre partie, d'autre part, un système d'assemblage immobile en rotation.
